(19) Europäisches Patentamt
European Patent Office
Office européen des brevets

(11) **EP 3 940 642 A1**

(12) **EUROPEAN PATENT APPLICATION**

(43) Date of publication:
**19.01.2022 Bulletin 2022/03**

(51) International Patent Classification (IPC):
***G06T 7/593*** (2017.01)          ***G06T 7/80*** (2017.01)

(21) Application number: **20186341.2**

(52) Cooperative Patent Classification (CPC):
**G06T 7/593; G06T 7/85**

(22) Date of filing: **16.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FURUNO ELECTRIC CO., LTD.**
**Nishinomiya-City**
**Hyogo 662-8580 (JP)**

(72) Inventor: **IKEGAMI, Atsushi**
**Nishinomiya-city, Hyogo 662-8580 (JP)**

(74) Representative: **CSY London**
**10 Fetter Lane**
**London EC4A 1BR (GB)**

(54) **UNDERWATER 3D RECONSTRUCTION DEVICE**

(57)     The disclosure relates to a 3D image reconstruction device (100) that includes a stereo camera (105, 110), a data storage device (130), and a 3D reconstruction module (150). The stereo camera (105, 110) includes a first camera and a second camera that take a pair of pictures in an underwater environment of a target. The data storage device (130) stores a plurality of sets of parameters, each set of the plurality of sets of parameters modelling the stereo camera that produces pictures of an underwater target at a distance from the stereo camera. Two sets from the plurality of sets of parameters model the stereo camera at different distances. The 3D reconstruction module (150) calculates a 3D position of the target based on a 2D position of the target on the pair of pictures and a selected set selected from the plurality of sets of parameters.

FIG. 1

**Description**

**TECHNICAL FIELD**

The present subject matter described herein, relates to the technical field of reconstructing fish image. The present subject matter, particularly, relates to a device for underwater fish size measurement based on stereo camera & camera calibration.

**BACKGROUND OF THE INVENTION**

Background description includes information that may be useful in understanding the present invention. It is not an admission that any of the information provided herein is prior art or relevant to the presently claimed invention, or that any publication specifically or implicitly referenced is prior art.

The aquatic products play an important role in meeting human protein demand. To sustainably manage fish resources with high efficiency, fishermen have to catch fish appropriately and obtain meaningful information. Pre-catch knowledge of fish size is important during fishing operations as undersized and/or low-quality fish can lead to financially unsustainable operations. Obtaining fish size estimates without biological sampling is also of interest for autonomous platforms such as surface and underwater camera devices.

An estimate of correct fish size becomes a vital parameter to appraise stock status, and increase economic benefits for an aquaculture industry. In fish culture, gathering fish size information to describe and manage the growth of fish is necessary to harvest the stock at the optimum time. Fish size can be used to predict a range of population-level characteristics and to evaluate the stocks for rearing activity. Determining the fish size find an application in marketing, fish should be sorted by size after harvesting to estimate the value. This step is necessary to set different prices and manage market economics. Simultaneously, size information can be used to monitor quality in the food industry, which can help aquaculture industry evaluate the price. The size information also can help to measure biomass and morphology of the fish, such as volume and even estimation of fat content. Therefore, fish size is a significant parameter necessary for the aquaculture industry.

The conventional methods disclose calculating fish size using underwater stereo cameras and 3D reconstruction techniques.

When performing fish sizing, cameras are in a multi medium (air, water, transparent window) condition, which causes refraction. Several known camera calibration techniques are employed to negate the refraction conditions. Camera calibration technique estimates the parameters of a lens and image sensor of a camera. These parameters are used to correct lens distortion, measure the size of an object in world units, or determine the location of the object in the scene. The parameters may include intrinsic, extrinsic, and distortion coefficients. To estimate the camera parameters, 3-D world points are required and their corresponding 2-D image points. These correspondences are obtained using multiple images of a calibration pattern. Using the correspondences, camera parameters are solved.

In other known techniques a pinhole camera is used in the devices to determine size. Pinhole camera model does not take refractions into consideration. The pinhole camera model is a single focal length model, but due to refractions, the focal length and the distortion coefficients are not constant.

A pinhole camera model is often represented by the following equation:

$$s[x\ y\ 1]^T = A\ [R\ t]\ [X\ Y\ Z\ 1]^T$$

where:

- x, y is a 2D point position in pixel coordinates
- X, Y, Z is a 3D position in World coordinates
- s is a scale factor

- A, the intrinsic matrix, is a matrix made of the 5 intrinsic parameters $\left(A = \begin{matrix} \alpha & \gamma & u0 \\ 0 & \beta & vo \\ 0 & 0 & 1 \end{matrix}\right),$ among which $\alpha$ and $\beta$ represent focal length in terms of pixels.
- [R t], the extrinsic parameters, are the Rotation and Translation which relates the World coordinate system to the camera coordinate system.

The camera model also includes lens distortion that includes radial and tangential lens distortions. The radial distortion parameters model the radial distortion as follows:

$$x_{distorted} = x \, (1 + k1 * r^2 + k2 * r^4 + k3 * r^6)$$

$$y_{distorted} = y \, (1 + k1 * r^2 + k2 * r^4 + k3 * r^6)$$

The tangential distortion parameters model the tangential distortion as follows:

$$x_{distorted} = x + [2 * p1 * x * y + p2 * (r^2 + 2 * x^2)]$$

$$y_{distorted} = y + [p1 * (r^2 + 2 * y^2) + 2 * p2 * x * y]$$

where:

- x, y is an undistorted pixel location
- $x_{distorted}$, $y_{distorted}$ is a distorted point
- k1, k2, k3 are the radial distortion coefficients of the lens
- p1, p2 are the tangential distortion coefficients of the lens
- $r^2 = x^2 + y^2$

The calculation of these intrinsic parameters, extrinsic parameters, and distortion coefficients and 3D reconstruction lead to calculating the size of an object, preferably fish in underwater. These parameters and coefficients can be estimated by calibration. There exist many calibration methods, such as Zhang's method, Tsai's method used in such techniques.

The problem addressed by the present invention is, when the cameras that perform 3D reconstruction and measure fish size are positioned in the underwater environment, there are refractions, and focal length, and distortion coefficients do not remain constant. Such conditions lead to incorrect 3D reconstruction with erroneous fish size measurement. The cameras, according to the existing methods, are placed in a water-resistant case having a transparent window in front of the lenses. As a ray of light that reflects from an underwater target (e.g., a fish) to a camera, it has to travel through different mediums i.e., water, transparent window, and air causing refractions. Due to refraction, the parameters of the camera change depending on the distance between the target object and the camera. As a result, size of underwater targets cannot be accurately calculated.

There are some conventional countermeasures discussed in the prior arts. Prior arts present devices with fitting of a water housing on the lens of the camera so that it eliminates refraction. Such devices have a complex construction and are not easy-to-use.

Prior art WO2019/188506 discloses a fish size calculation device. The prior art discloses a fish length calculation system based on camera. A calibration of the camera is performed using a conventional method, such as DLT. Depending on the distance between the fish and the camera, the error that occurs when calculating fish length with this calibrated system is known and the error is corrected. This method has a drawback as it seems to provide correct target size information when the fish is on the axis perpendicular to the camera and intersecting with the camera but when the fish is away from that axis the method seems to provide an incorrect reading.

The present invention addresses the problem by correctly performing 3D reconstruction and therefore correctly calculating an underwater target size using a stereo camera and calibration techniques. The stereo camera of the present invention is calibrated to obtain set of intrinsic and extrinsic parameters along with distortion coefficients at plurality of distances. Post the calibration, 3D reconstruction is performed to provide correct fish size.

## SUMMARY OF THE INVENTION

Solution to one or more drawbacks of existing invention, and additional advantages are provided in the present disclosure. Additional features and advantages are realized through the technicalities of the present disclosure. Other embodiments and aspects of the disclosure are described in detail herein and are considered to be a part of the claimed disclosure.

The present disclosure relates to a 3D image reconstruction device of an underwater target that includes a stereo camera, a data storage device, and a 3D reconstruction module. The stereo camera includes a first camera and a second camera configured to take a pair of pictures of a target in an underwater environment. The data storage device is configured to store a plurality of sets of parameters, each set of the plurality of sets of parameters modelling the stereo camera that produces pictures of an underwater target at a distance from the stereo camera. Two sets from the plurality of sets of parameters model the stereo camera at different distances. The 3D reconstruction module is configured to calculate a 3D position of the target based on a 2D position of the target on the pair of pictures and a selected set selected from the plurality of sets of parameters.

In an aspect, a distance calculation module is configured to calculate a distance between the target and the stereo camera based on a 2D position of the target on the pair of pictures. A set selection module is configured to select the selected set based on the calculated distance.

Preferably, the set selection module is configured to select the selected set by selecting one set from the plurality of sets of parameters, the distance of the selected set being closest to the calculated distance from among the plurality of sets of parameters.

In another aspect of the invention, the set selection module is configured to select the selected set by selecting a first set and a second set from the plurality of sets of parameters, the calculated distance being between the distance of the first set and the distance of the second set. The 3D reconstruction module is configured to calculate an interpolated set from the first set and the second set, and calculate the 3D position of the target based on the interpolated set.

In another aspect of the invention, the distance calculation module is configured to calculate the distance using one of the plurality of sets of parameters.

In yet another aspect of the invention, the distance calculating module is configured to calculate the distance using a focal length of the stereo camera and a refractive index of water with respect to air.

In one aspect of the present disclosure, each set of the plurality of sets of parameters is obtained by calibrating the stereo camera with an underwater target placed in a vicinity of the distance for which the set is to be obtained.

Preferably, the parameters of each set of parameters comprise parameters of a pinhole camera model.

Preferably, the parameters of each set of parameters further comprise lens distortion coefficients.

In an aspect of the invention, a waterproof case enclosing air and the stereo camera, and including a light transparent material though which the stereo camera takes the pictures of the target.

According to another aspect of the present disclosure relates to a method which includes capturing a pair of pictures of a target in an underwater environment using a stereo camera; storing a plurality of sets of parameters, each set of the plurality of sets of parameters modelling the stereo camera that produces pictures of an underwater target at a distance from the stereo camera, wherein, two sets from the plurality of sets of parameters model the stereo camera at different distances; and calculating a 3D position of the target based on a 2D position of the target on the pair of pictures and a selected set selected from the plurality of sets of parameters.

The foregoing summary is illustrative only and is not intended to be in any way limiting. In addition to the illustrative aspects, embodiments, and features described above, further aspects, embodiments, and features will become apparent by reference to the drawings and the following detailed description.

## EFFECT OF THE INVENTION

The present invention provides a device which performs correct 3D reconstruction of image of a target with stereo camera in underwater conditions. The device eliminates requirement of a special model that would take multi medium into consideration or a special camera that eliminates refraction (water housing), with the conventional pinhole camera model, using a conventional calibration method.

## BRIEF DESCRIPTION OF THE DRAWINGS

It is to be noted, however, that the appended drawings illustrate only typical embodiments of the present subject matter and are therefore not to be considered for limiting of its scope. The detailed description is described with reference to the accompanying figures. In the figures, a reference number identifies the figure in which the reference number first appears. The same numbers are used throughout the figures to reference like features and components. Some embodiments of system or methods or structure in accordance with embodiments of the present subject matter are now described, by way of example, and with reference to the accompanying figures, in which:

Fig. 1 is a flowchart illustrating the structural features of the invention;

Fig. 2 illustrates the present device placed in an underwater condition;

Fig. 3 is a flowchart illustrating one example of a procedure to reconstruct 3D image of a target according to the present invention.

The figures depict embodiments of the present subject matter for the purposes of illustration only. A person skilled in the art will easily recognize from the following description that alternative embodiments of the structures and methods illustrated herein may be employed without departing from the principles of the disclosure described herein.

## DETAILED DESCRIPTION OF THE INVENTION

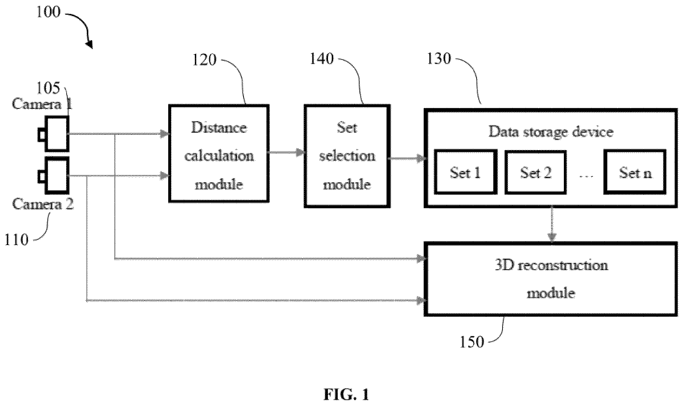

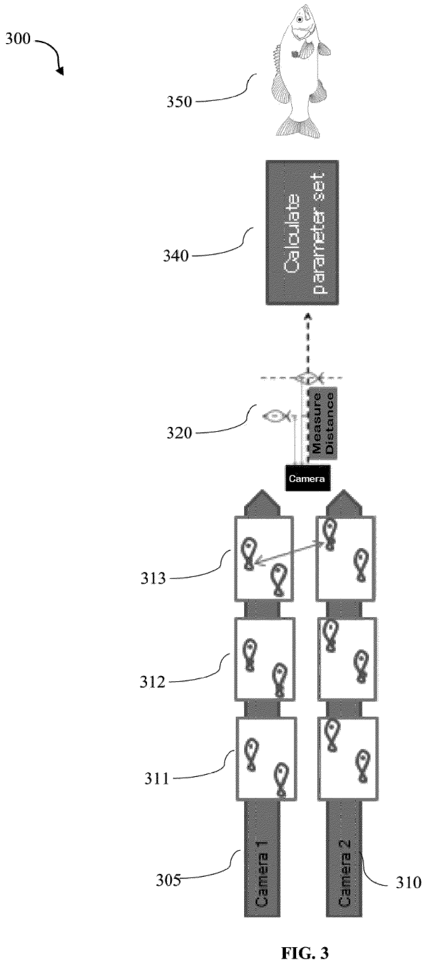

Referring to Figs. 1 and 3, a device (100) for performing a 3D reconstruction of a target, preferably a fish is illustrated. In an embodiment, the device (100) includes a stereo camera, comprising of a first camera (105, 305) and a second camera (110, 310), a distance calculation module (120, 320), a set selection module (140, 340), a data storage device (130), and a 3D reconstruction module (150, 350).

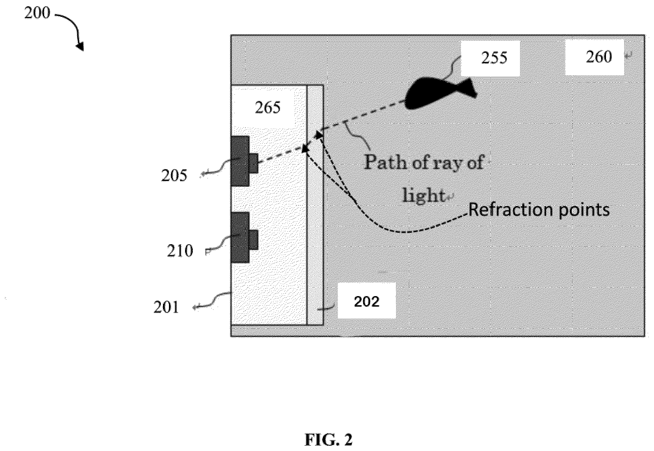

In an embodiment of the invention, an in-house calibration step is performed before performing the 3D reconstruction with the device (100). Referring to Fig. 2, in a multi medium environment, in which refractions occur, the parameters of the pinhole camera model and the distortion coefficients are changing depending on a position of the target (255) relative to the stereo camera (205,210). For this reason, the stereo camera is calibrated in a manner as follows:

a) Calibration is performed in a medium, preferably water (260), at a plurality of distances from the stereo camera (205, 210) using a conventional calibration method such as Zhang's calibration method and methods alike. The stereo camera is placed in a waterproof case (201) enclosing air (265) and including a light transparent material (202) through which the stereo camera takes the picture of target, such as a checkerboard. In order to perform calibration at the plurality of distances, the checkerboard is placed in a vicinity of the distances.

b) This results in creating a plurality of sets of parameters. Each set comprises intrinsic and extrinsic parameters of the pinhole camera model. Each set also preferably comprises radial and tangential lens distortion coefficients. The sets are obtained for each of a plurality of distances at which the calibration has been performed. For the instance, set 1 at distance 1, ...., set n at distance n. The data storage device (130) is configured to store the plurality of sets of parameters. Each set of the plurality of sets of parameters models the stereo camera that produces pictures of an underwater target at the distance from the stereo camera at which the calibration has been performed. It is to be understood that the sets from the plurality of sets of parameters are modelling the stereo camera at different distances.

c) Once the in-house calibration using the above steps is performed, the following 3D reconstruction can be performed.

Referring to Fig.2, the stereo camera (105, 205, 110, 210) is placed in a waterproof case (201) enclosing air (265) and including a light transparent material (202) through which the stereo camera takes pictures of target (255).

The stereo camera (105, 305 110, 310) is configured to take pair of pictures (311) using a camera sync strobe module. The stereo camera (105, 305, 110, 310) is configured to take a pair of pictures (311) at the same or almost same timing using synchronization conventionally done by, for example, using General Purpose Input/output (GPIO) Synchronization, bus timestamp synchronization, sound signal synchronization or methods alike.

A target detecting module (312) is configured to perform task of detecting a fish on each picture (311). A point on a fish is shown to indicate the presence of a detected fish. In an alternative, instead of a point, a filled area or a rectangular box is also conventionally used to indicate presence of a detected fish. This process is conventionally executed by processor circuitry, and by some cameras. It is proposed that conventional point detection methods are used for performing the task of detecting fish such as, machine learning, feature point detection, edge detection techniques.

A pairing module (313) is configured to pair a fish on each pair of pictures (311). It pairs corresponding fish on the pair of pictures. It is apparent that there are several conventional pairing methods available that can be used, such as, block matching, with or without machine learning capabilities.

The distance calculating module (120, 320) is configured to calculate a rough estimation of distance between the target and the stereo camera. The distance calculation is based on a 2D position of the target on the pair of pictures.

In a feature of the invention, the distance calculating module (120, 320) is configured to calculate the distance using a method as follows:

a) Acquire the parameters of the pinhole camera model and the distortion coefficients provided in the specifications of the camera by the maker. These parameters are usually design parameters provided from the design specifications from the maker and are actually not measured by the maker after the production of the camera.

b) As it is assumed the specifications of the maker have been established for a use of the camera in air, multiply the parameters related to the focal distance (i.e., $\alpha$ and $\beta$) by the refractive index of water with respect to air i.e. 1.33.

c) Use default values for parameters and coefficients not provided in the specifications.

d) Calculate the distance of the target detected at step (312) with these parameters and coefficients, and a 2D position of the target on the pair of pictures (311) using for example triangulation principle.

In another feature of the invention, the distance calculating module (120, 320) is configured to calculate the distance using a method as follows:

a) Assuming that the stereo camera (105,110,305,310) has been calibrated beforehand in air, acquire the resulting parameters of the pinhole camera model and the distortion coefficients. These parameters are thus stored in the data storage device (130).

b) Multiply the parameters related to the focal distance (i.e., $\alpha$ and $\beta$) by the refractive index of water with respect to air i.e., 1.33.

c) Calculate the distance of the target detected at step (312) with these parameters and coefficients, and a 2D position of the target on the pair of pictures using for example triangulation principle.

In a preferred feature of the invention, the distance calculating module (120, 320) is configured to calculate the distance using a method as follows:

a) Retrieve from the data storage device (130) one of the sets of parameters acquired during the in-house calibration in water. Any one set from the sets of parameters may be selected.
b) Calculate the distance of the target detected at step (312) with the retrieved set of parameters, and a 2D position of the target on the pair of pictures using for example triangulation principle.

The set selection module (140, 340) is configured to calculate a set comprising intrinsic and extrinsic parameters, and distortion coefficients based on the plurality of sets obtained during the in-house calibration, and based on the rough distance between the target and the camera calculated by the distance calculating module (120, 320). In a preferred embodiment, from among the plurality of sets, set 1 at distance 1, ...., set n at distance n, obtained during the in-house calibration, select one of the sets, for instance, by selecting the set whose distance is closest to the rough distance acquired at step (320). For instance, if there are sets for 0.3m, 0.5m, 1m, 2m and 5m, and the rough distance acquired at step (320) is 3m, the set selection module (140, 340) may select the set for 2m as the selected set as it is the closest set. It is to be understood that, the plurality of sets is stored in the data storage device (130) and set selection module (140, 340) is configured to select the set. 3D reconstruction of the target may be calculated by the 3D position reconstruction module (150, 350) based on the selected set.

In another embodiment, the set selection module (140, 340) is configured to select a first set and a second set (i.e., two sets) from among the plurality of sets whose distances are closest to the rough distance acquired at step (320). For instance, if there are sets for 0.3m, 0.5m, 1m, 2m and 5m, and the rough distance acquired at step (320) is 3m, the set selection module (140, 340) may select the set for 2m as the first set and the set for 5m as the second set as they are the two closest sets. Thereafter, the set selection module (140, 340) calculates an interpolated set from the first set and the second set. The interpolated set may be interpolated from the first and second sets by setting weights on the first and second sets based, for example, on a relative position of the target with regard to the first and second sets that are respectively acquired at a first distance and a second distance from the stereo camera. 3D reconstruction of the target may be calculated by the 3D position reconstruction module (150, 350) based on the interpolated set.

The 3D position reconstruction module (150, 350) is configured to convert the 2D position of the detected target on the pair of pictures to a 3D position using the set of parameters calculated by the set selection module (140, 340). There are several conventional conversion methods for 2D to 3D form conversion, and the present invention is configured to use triangulation without adding limitation to the type of form conversion that can be used in the present invention.

Subsequently, as any 2D position on the detected target on the pair of pictures can be converted into a 3D position by the 3D position reconstruction module (150, 350), the device (100) may calculate a size of the target by calculating a distance between two positions on the target.

A technical effect of the embodiments of the invention will now be described. Conventionally, underwater 3D reconstruction with stereo camera was performed with a single set of calibration parameters. However, when performing 3D reconstruction underwater, as the stereo camera is in a multi-medium (air, water, transparent window) environment, refractions occur. As a result, calibration parameters of the stereo camera change depending on the distance with the stereo camera.

In order to solve this problem, in embodiments of the present disclosure, the stereo camera is calibrated at a plurality of distances from the stereo camera. When performing a 3D reconstruction of a target, the target is reconstructed using calibration parameters that have been obtained at a distance that is close to a distance of the target. As a result, a more accurate 3D reconstruction can be achieved.

**Claims**

1.  A device (100), comprising:

    a stereo camera (105, 110) comprising a first camera and a second camera configured to take a pair of pictures in an underwater environment of a target;
    a data storage device (130) configured to store a plurality of sets of parameters, each set of the plurality of sets of parameters modelling the stereo camera (105, 110) that produces pictures of an underwater target at a distance from the stereo camera (105, 110), wherein two sets from the plurality of sets of parameters model the stereo camera at different distances; and
    a 3D reconstruction module (150) configured to calculate a 3D position of the target based on a 2D position of the target on the pair of pictures and a selected set selected from the plurality of sets of parameters.

2.  The device of claim 1, further comprising:

    a distance calculation module (120) configured to calculate a distance between the target and the stereo camera (105, 110) based on a 2D position of the target on the pair of pictures; and
    a set selection module (140) configured to select the selected set based on the calculated distance.

3.  The device of claim 2, wherein:
    the set selection module (140) is configured to select the selected set by selecting one set from the plurality of sets of parameters, the distance of the selected set being closest to the calculated distance from among the plurality of sets of parameters.

4.  The device of claim 2, wherein:
    the set selection module (140) is configured to select the selected set by selecting a first set and a second set from the plurality of sets of parameters, the calculated distance being between the distance of the first set and the distance of the second set.

5.  The device of claim 4, wherein:
    the 3D reconstruction module (150) is configured to calculate an interpolated set from the first set and the second set, and calculate the 3D position of the target based on the interpolated set.

6.  The device of any one of claims 2 to 5, wherein:
    the distance calculation module (120) is configured to calculate the distance using one of the plurality of sets of parameters.

7.  The device of any one of claims 2 to 5, wherein:
    the distance calculating module (120) is configured to calculate the distance using a focal length of the stereo camera (105, 110) and a refractive index of water with respect to air.

8.  The device of any one of the previous claims, wherein:
    each set of the plurality of sets of parameters is obtained by calibrating the stereo camera (105, 110) with an underwater target placed in a vicinity of the distance for which the set is to be obtained.

9.  The device of any one of the previous claims, wherein:
    the parameters of each set of parameters comprise parameters of a pinhole camera model.

10. The device of claim 9, wherein:
    the parameters of each set of parameters further comprise lens distortion coefficients.

11. The device of any one of the previous claims, further comprising:
    a waterproof case (201) enclosing air (265) and the stereo camera (105, 110), and including a light transparent material (202) though which the stereo camera (105, 110) takes the pictures of the target.

12. A method comprising:

    capturing (311) a pair of pictures of a target in an underwater environment with a stereo camera;
    storing a plurality of sets of parameters, each set of the plurality of sets of parameters modelling the stereo camera that produces pictures of an underwater target at a distance from the stereo camera, wherein two sets from the plurality of sets of parameters model the stereo camera at different distances; and
    calculating (350) a 3D position of the target based on a 2D position of the target on the pair of pictures and a selected set selected from the plurality of sets of parameters.

**FIG. 1**

200

255    260

265

205

210

201

Path of ray of
light
Refraction points

202

**FIG. 2**

**FIG. 3**

Europäisches
Patentamt

European
Patent Office

Office européen
des brevets

# EUROPEAN SEARCH REPORT

Application Number

EP 20 18 6341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/002826 A1 (ISHIYAMA EIJI [JP] ET AL) 3 January 2013 (2013-01-03)<br>* abstract *<br>* paragraph [0046] - paragraph [0051] *<br>* paragraph [0061] - paragraph [0062] *<br>* figures 1, 2, 6 *<br>----- | 1-12 | INV.<br>G06T7/593<br>G06T7/80 |
| Y | Mark Shortis: "Camera Calibration Techniques for Accurate Measurement Underwater"<br>In: "3D Recording and Interpretation for Maritime Archaeology",<br>1 January 2019 (2019-01-01), Springer International Publishing, Cham,<br>XP055752590,<br>ISSN: 2211-0577<br>ISBN: 978-3-030-03635-5<br>vol. 31, pages 11-27, DOI:<br>10.1007/978-3-030-03635-5_2,<br>* abstract *<br>* sections 2.1, 2.3.1, 2.3.2 *<br>* figures 2.3, Top *<br>* figures 2.4, 2.5 *<br>----- | 1-12 | |
| Y | WO 2018/111124 A2 (UNIV OF THE PHILIPPINES [PH]) 21 June 2018 (2018-06-21)<br>* abstract *<br>* section "B. Underwater Stereo Camera Calibration" *<br>----- | 1,12 | TECHNICAL FIELDS SEARCHED (IPC)<br><br>G06T |

The present search report has been drawn up for all claims

| Place of search | Date of completion of the search | Examiner |
|---|---|---|
| Munich | 24 November 2020 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 18 6341

24-11-2020

| Patent document cited in search report | | Publication date | Patent family member(s) | | Publication date |
|---|---|---|---|---|---|
| US 2013002826 | A1 | 03-01-2013 | CN | 102822621 A | 12-12-2012 |
| | | | JP | WO2011125937 A1 | 11-07-2013 |
| | | | US | 2013002826 A1 | 03-01-2013 |
| | | | WO | 2011125937 A1 | 13-10-2011 |
| WO 2018111124 | A2 | 21-06-2018 | BR | 112019011080 A2 | 01-10-2019 |
| | | | PH | 12016000469 A1 | 25-06-2018 |
| | | | WO | 2018111124 A2 | 21-06-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019188506 A